# EUROPÄISCHE PATENTSCHRIFT

(11) **EP 0 940 576 B1**
(45) Veröffentlichungstag und Bekanntmachung des Hinweises auf die Patenterteilung: **13.10.1999**
(21) Anmeldenummer: 98106230.0
(22) Anmeldetag: 06.04.1998
(51) Int. Cl.: F03B 7/00

(54) **Wasserradturbine für Wasserkraftanlangen**
Waterwheel
Roue hydraulique

(43) Veröffentlichungstag der Anmeldung: 08.09.1999
(73) Patentinhaber: Ihrenberger, Adolf, Dipl.-Ing. (FH), 6600 Reutte (AT)
(72) Erfinder: Ihrenberger, Adolf, Dipl.-Ing. (FH), 6600 Reutte (AT)
(74) Vertreter: Lohnert, Wolfgang, Dr.

(56) Entgegenhaltungen:
- DE-A- 19 517 261
- DE-C- 370 513
- DE-C- 4 339 236
- FR-A- 1 078 558
- US-A- 1 773 010
- US-A- 4 385 497

## Beschreibung

Die Erfindung betrifft ein Wasserrad, bzw eine Wasserradturbine für Wasserkraftanlagen in Nutzung der Fallhöhe des Wassers. Die Wasserradturbine weist eine waagrechte Radwelle und eine Mehrzahl von im Bereich des Radumfanges gleichmäßig, Wand an Wand angeordneten Zellen auf. Die Zellen sind stirnseitig geschlossen und besitzen Zellenöffnungen zur Aufnahme, bzw. Abgabe des Wassers.

Derartige Wasserräder sind von Alters her bekannt, sie dienten vor allem zur Erzeugung mechanischer Energie. Mit der Ausbreitung großtechnischer Anlagen, insbesondere zur Gewinnung elektrischer Energie, haben Wasserturbinen das Wasserrad weitgehend verdrängt. Entsprechend gering waren in den vergangenen Jahrzehnten die Anstrengungen zur technischen Weiterentwicklung und Leistungsverbesserung von Wasserrädern.
Während Wasserräder definitionsgemäß mechanische Energie aus der potentiellen Energie des Wassers gewinnen, wird bei Wasserradturbinen sowohl die potentielle Energie als auch in einem nutzbaren Ausmaß die kinetische Energie des fließenden Wassers in darauf angepaßten Schaufeln bzw. Zellenwandungen genutzt. Die Wasserradturbine ist innerhalb der Klasse der Strömungsmaschinen als Gleichdruckturbine einzustufen.

Eine Übersicht über den heutigen Stand der Technik gibt das Fachbuch: Bau von Wasserkraftanlagen; praxisbezogene Planungsunterlagen; Autoren König / Jehle; C.F. Müller Verlag; dritte, "völlig neu überarbeitete" Auflage, 1997.
Beginnend auf Seite 197 befaßt sich ein Kapitel mit Wasserrädern. Es beschreibt die Vorteile gegenüber Turbinen, wie vergleichsweise anspruchslose Tiefbauarbeiten und kostengünstige offene Bauweise. Gleichzeitig wird bei der Darstellung einzelner Ausführungsbeispiele das vorzeitige Ausfließen mehr oder weniger großer, ursprünglich in die einzelne Zelle eingeflossener Wasservolumen vor Erreichen des Unterwasser-Niveaus als systembedingter Nachteil geschildert und hingenommen.

Die übliche graphische Darstellung des Wirkungsgrades η eines Wasserrades in Abhängigkeit vom Quotienten Qₙ/Q (mit Qₙ = Normmenge und Q = tatsächlich beförderte Menge) belegt dies insofern anschaulich, als dort der max. Wirkungsgrad stets weit unter 1 (100%) bleibt und über weite Befüllungsgrade unverändert konstant ist.

Es fehlte in der Vergangenheit nicht an Verbesserungsvorschläge zur Zellenform von Wasserrädern, bzw. Wasserradturbinen, insbesonere auch solcher hinsichtlich konstruktiven Maßnahmen, um den Wasserverlust einer Zelle vor Durchlaufen der Fallhöhe möglichst gering zu halten. Die Maßnahmen konzentrierten sich vor allem auf eine Verlängerung der Auslauflippe der Zellenöffnung, sowie auf Zellenbauformen, bei denen der virtuelle Schwerpunkt des in die Zelle eingefüllten Wassers möglichst weit unter das Ein- und Auslaßöffnungs-Niveau zu liegen kommt. In diesem Zusammenhang ist dem Fachmann aber auch bekannt, daß mit zunehmender radialer Höhe einer einzelnen Zelle die theoretisch nutzbare Fallhöhe zwischen Ober- und Unterwasser vermindert wird, und zwar näherungsweise um die doppelte radiale Zellenhöhe. Hohe, aber nur teilweise gefüllte Zellen stellen daher bezüglich der theoretisch nutzbaren Wasserenergie immer einen nachteiligen Kompromiß dar.

Die DE 3621312 A1 beschreibt beispielsweise ein Wasserrad, deren Zellen (Becher) so geformt sind, daß die erfindungsgemäß weit ausragenden Zungen einer Zellenwand das vorzeitige Entleeren der Becher verhindern.

Zur Aufgabe, Kleinwasserreserven mit kleinem Volumenstrom und kleiner Fallhöhe besser zu nutzen, nennt die DE 3938748 C2 eine Lösung, gemäß der das vorzeitige Ausfließen des Wassers aus einer Zelle mittels eines pneumatischen Abdichtsystems der Zellen erfolgt und wobei die Dichtung der offenen Zellen gegen die ortsfesten äußeren Begrenzungen und Wände mittels pneumatisch beaufschlagter Dichtringe erfolgt. Nachteilig bei dieser Lösung ist aber, daß jede Art von Gleitdichtung wesentliche Reibungsverluste bzw. Wirkungsgrad - Minderung zur Folge hat und mit Verschleiß verbunden ist. Eine Wasserradturbine nach dem oberbegriff des Anspruchs 1 ist bekannt aus US-A-4 385 497.

Aufgabe vorliegender Erfindung ist es daher, durch konstruktive Maßnahmen an den Zellen von Wasserrädern, bzw. Wasserradturbinen deren Wirkungsgrad gegenüber bekannten Ausführungen zu erhöhen - bezogen auf die der Anlage tatsächlich pro Zeiteinheit zugeführte Wassermenge und die tatsächlich verfügbare Wasser-Fallhöhe. Die Aufgabe besteht anders formuliert darin, besser als bei bekannten Systemen, die Zellen mit dem über ein Gerinne zugeführten Wasser schnell, ohne nennenswerte Wasserverluste und bei hohem Füllgrad zu fluten und das Potential der eingefüllten Wassermenge über eine der Wasser-Fallhöhe nahekommende wirksame Höhe zur Drehmomentbildung und zur Energieabgabe über die Radwelle zu nutzen. Neben der potentiellen Energie des Wassers soll die auch ohne Sondermaßnahmen bei Fließwasser stets nutzbare Wasser-Stoßenergie beim Befüllen und Leeren der einzelnen Zelle wirksam in Drehmoment überführt werden.

Diese Aufgabe wird erfindungsgemäß durch eine Wasserradturbine der eingangs beschriebenen Art gelöst, bei der die Verschlußklappe über ein Gestänge (4) mit einer zweiten, zur Ent- und Belüftung dienenden Luftklappe (5) mechanisch verbunden ist und die Wasserradturbine eine ortsfeste Steuervorrichtung und mechanische Übertragungselemente zum jeweils gleichzeitigen Öffnen oder Schließen von Verschluß- und Luftklappe besitzt.

Angesichts des zum Stand der Technik beschriebenen, vorzeitigen Wasserverlustes von Zellen einer Wasserradanlage erscheint ein Verschließen der Zellen zunächst das Mittel der Wahl zu sein. Doch verbunden mit der gleichzeitigen und unverzichtbaren Forderung nach Füllen und Entleeren von Zellen innerhalb sehr kurzer Zeitabschnitte schied diese Lösung für den Fachmann bisher offensichtlich aus. Die Probleme der Luftverdrängung, wie sie vom schnellen Füllen und Leeren von Flaschen bekannt sind, gelten im vorliegenden Fall gleichermaßen.

Mittels des erfindungsgemäßen Merkmals, der mechanischen Kopplung von Wasser-Verschlußklappe und Luftklappe, läßt sich dieses Problem bei der Wasserradturbine bei einer geeigneten Klappen - Ansteuerung überraschend wirkungsvoll lösen. Der hohe Befüllungsgrad einer Zelle innerhalb systembedingt kurzer Zeitintervalle war für den Fachmann überraschend.

Die erfindungsgemäße Lösung mit Klappen, bzw. einem Klappenpaar, für die einzelnen Zellen bedarf einer leistungsfähigen Steuervorrichtung zum Öffnen und Schließen der Zellen. Eine vorteilhafte konstruktive Ausgestaltung der Steuerung ist das mechanische Öffnen - gegen die Kraft einer Zug- oder Druckfeder - mittels einer an der Klappenaußenfläche, vornehmlich an der Luftklappe, starr angebrachten Rolle, welche ihrerseits während der Rotation des Wasserrades an vorbestimmtem Ort über die gekrümmte Stirnfläche einer im Raum ortsfesten Kurvenscheibe gleitet und damit die Klappen der einzelnen Zellen kontinuierlich bis zu einem vorbestimmten Öffnungswinkel öffnet und wieder schließt. Die Schließbewegung wird durch Federkraft unterstützt bzw. ermöglicht.
Gleichermaßen kann das Öffnen und Schließen der Klappen beispielsweise mittels auf Verwindung in den Klappengelenken beanspruchter mechanischer Federn erfolgen.
Die ortsfeste Steuervorrichtung für die Klappen kann in der Wasserkraftanlage außerhalb der Wasserradturbine installiert sein.
Besonders vorteilhaft ist es indes, die Steuervorrichtung innerhalb der rotierenden Einheit ortsfest anzubringen.
Mit dem Aufsetzen des Steuerelementes auf der Radwelle und dem Ortsfestmachen durch Anbringen eines vergleichsweise schweren Pendelgewichtes unter der Radwelle wird diese Forderung höchst wirkungsvoll erfüllt. Eine derartige Lösung erlaubt eine von Relativbewegungen zwischen Rad und Umfeld unbeeinflußte, exakte Klappenbetätigung. Die Lagerung auf der Radwelle erlaubt aber zudem eine Positionierung der Kurvenscheibe in jeder gewünschten Radialrichtung von der Radwelle aus gesehen.

Mit der Positionierbarkeit der Kurvenscheibe in verschiedenen Winkelstellungen ist aber eine erste wichtige Voraussetzung dafür gegeben, daß die Wasserradturbine gemäß Erfindung sowohl im oberschlächtigen, als auch im mittelschlächtigen und notfalls sogar im unterschlächtigen Betrieb eingesetzt werden kann.

Eine zweite Vorbedingung für die wirkungsvolle Anwendung der verschiedenen Betriebsarten ist die Möglichkeit zur angepaßten Ansteuerung der Klappen hinsichtlich Zeitpunkt und maximaler Weite der Klappenöffnung. Je nach Betriebsart lassen sich Kurvenscheiben mit unterschiedlichen Profilen und Krümmungen einsetzen, oder es läßt sich der Abstand der Kurvenscheibe zu den starr mit den Klappen verbundenen Übertragungselementen verändern.

Das herkömmliche Wasserrad erhält sein Drehmoment vornehmlich aus der potentiellen Energie des Wassers. Bei der Wasserradturbine gemäß Erfindung wird ein nennenswerter Anteil an der Leistung über die kinetische Energie des fließenden Wassers beigestellt.
Der Anteil der kinetischen Energie wird bei der erfindungsgemäßen Lösung einer Wasserradturbine wesentlich gesteigert, wenn anstelle der rein oberschlächtigen Beaufschlagung eine Überdruckbeaufschlagung erfolgt. Dies läßt sich beispielsweise realisieren, indem das Wasser in einem geschlossenen Gerinne unter entsprechendem Druck als laminar gerichtete Strömung über einen Breitstrahlauslaß zugeführt wird.

Da die vollständig verschließbare Zelle bestimmungsgemäß erst nahe des tiefsten Punktes der Rotationsbahn vergleichsweise schnell geöffnet wird, verleiht das ausfließende Wasser dem Wasserrad einen Rückstoß, welcher einen nennenswerten Beitrag zum Gesamtdrehmoment des Rades abgibt.

Verglichen mit größeren Wasserverlusten schon weit vor Erreichen des tiefsten Umlaufpunktes und ohne Nutzung des Wasser-Rückstoßes gemäß dem geläufigen Stand der Technik bedeutet das in zweifacher Hinsicht einen Energiegewinn.

Je nach Wandform der Zelle und Einlaßrichtung des fließenden Wassers, läßt sich auch beim Befüllen der Zellen ein nennenswerter Drehmomentanteil über die Stoßwirkung des Wassers auf die Zellenwand erzielen.

Die erfindungsgemäßen Ausführungen der Wasserradturbine sind weder hinsichtlich Formgebung, noch hinsichtlich verwendeten Materials beschränkt. Korrosionsfeste Metallbleche nehmen ebenso eine Vorzugsstellung ein, wie die Ausgestaltung in Form eines Zylindermantels mit stirnseitig verschweißten Deckeln bzw. Abdeckungen.
Ein Merkmal aller erfinderischen Ausgestaltungen ist die Wand an Wand Belegung eines äußeren Radialbereiches der Wasserradturbine mit Wasser, d.h., es gibt keine toten Zwischenräume, welche das transportierbare Wasservolumen einschränken, oder im Fall von nicht Wand an Wand liegenden Zellen bei gleichem transportierten Wasservolumen in der radialen Richtung höhere Zellenwände verlangen. In Radialrichtung höhere Zellen bedeutet aber, wie zum Stand der Technik ausgeführt, eine gegenüber der Wasser-Fallhöhe größere Reduzierungen der nutzbaren Höhe (Potentialhöhe).

Wie von herkömmlichen Wasserrädern bekannt, lassen sich auch die Zellen erfindungsgemäßer Wasserrradturbinen in ihrer Breite unterteilen, z.B. um bei wenig Laufwasser und entsprechend verringerter Gerinnebreite einen Abschnitt einer Zelle ganz zu füllen, anstelle die Zelle auf volle Breite nur teilweise zu füllen, was einen verringerten Wirkungsgrad zur Folge hätte.
Ein unterschiedlicher Befüllungsgrad der Zellen kann indes auch erwünscht sein und zur Drehzahlsteuerung der Wasserradturbine genutzt werden. Eine unterschiedliche Befüllung läßt sich auch durch geänderte Ansteuerung der Klappen mittels geänderter Positionierung der Kurvenscheibe, bzw. einer alternativen Vorrichtung erreichen.

Während herkömmliche Wasserräder mit offenen Zellen gemäß Stand der Technik keine Schwierigkeiten beim Anlaufen des Wasserrades haben, da der Überlauf der obersten, gefüllten Zelle regelmäßig die nächsttiefere Zelle füllt, bis ein ausreichendes Moment zur Überwindung der Haftreibung zwischen Radwelle und Lager aufgebaut ist, so kann dieses Prinzip bei der erfindungsgemäßen Wasserradturbine nicht genutzt werden. Anstelle dessen erhält jede an eine Nachbarzelle angrenzende Zellenwand ein geeignet dimensioniertes Loch, das im normalen Rotationsbetrieb keinen meßbaren Einfluß auf den Wirkungsgrad besitzt, zum Anlaufen des Rades aber nacheinander genügend Zellen füllt, um das notwendige Losbrechmoment aufzubringen.

Die bisher beschriebenen Ausgestaltungen der Erfindung beschränkten sich auf rein mechanische Lösungen, soweit dies die Bewegung der Klappen und die Vorrichtungen zu deren Ansteuerung betrifft. Für die Ansteuerung der Klappen, mit oder ohne Übertragung über eine Kurvenscheibe, sind auch elektromagnetisch, pneumatisch und hydraulischansteuerbare Elemente einsetzbar.

Alle erfindungsgemäßen Ausführungen weisen zusammengefaßt folgende Vorteile auf:
- kurze Befüllzeit der Zelle,
- hoher Füllgrad der Zelle,
- längstmögliche Wasserhaltung bis zur Entleerung,
- Ausnutzung der Stoßenergie des Wassers beim Befüllen,
- Ausnutzung der Rückstoßenergie des Wassers beim Entleeren
- optimale Nutzung der Wasser-Fallhöhe,
- leiser Lauf und geräuscharme Entleerung,
- keine Kavitation infolge niedriger Strömungsgeschwindigkeit,
- keine Wandreibungs- und Turbulenzverluste,
- sehr hoher Wirkungsgrad, auch bei Teillast
- lange Lebensdauer bei nahezu wartungsfreiem Betrieb
- Integrationsfähigkeit in ein Landschaftsbild

Nach einer überschlägigen Berechnung liegt der Wirkungsgrad vorliegender Wasserradturbine bei oberschlägiger Beaufschlagung bei etwa 98% und übertrifft damit deutlich die für Kaplan-, Pelton-, Franzis- und Durchströmturbinen bekannten Werte. Herkömmliche Wasserräder erreichen deutlich niedrigere Wirkungsgrade. Doch auch bei mittelschlächtiger und unterschlächtiger Beaufschlagung kommt der Vorteil der Verschlußklappen- und Luftklappen-Verstellbarkeit voll zum Tragen. Im letzteren Fall treten bei herkömmlichen Zellen und Schaufelformen nennenswerte Bremsverluste beim Eintauchen auf.

Das durch die Wasserradturbine erzeugte Drehmoment wird über die Radwelle ausgeleitet, entweder über Getriebe und Transmissionen zum mechanischen Antrieb von Maschinen,
oder über angekoppelte Generatoren zur Erzeugung von elektrischer Energie.

Durch den Einsatz neuer Technologien, wie beispielsweise gesteuerte Frequenzumrichter als 1-, oder U-Umrichter im 2-, oder 4-Quadrantenbetrieb, lassen sich "getriebelose" Stromerzeugungseinrichtungen bereitstellen, wodurch Anlagen in Nutzung der Wasserkraft gemäß Erfindung (Klein- und Kleinstkraftwerk-Anlagen) ein beachtlicher wirtschaftlich technischer Stellenwert beigemessen werden muß. Solche Konzeptionen sind geeignet, bisherige Probleme mit der Stromerzeugung durch Wasserräder mit geringer Drehzahl zu lösen, wie Problem der Drehzahlanpassung an synchrone Drehzahlen, des Netzparallelbetriebes und des frequenzstabilen Inselbetriebes.

Der leise Lauf der Wasserradturbine und das Fehlen der erheblichen Geräusche herkömmlicher Wasserräder beim Entleeren aus großer Höhe einerseits und der mechanischen Getriebe andererseits, erlaubt die getriebelose Stromerzeugung selbst in umweltpolitisch sensiblen Gebieten.
Zunehmendes Umweltbewußtsein, z.B. gegenüber CO₂-Ausstoß, erweitern den Einsatz von Wasserradturbinen gemäß Erfindung in den Bereich auch kleinster Wasserkraftanlagen. In gleicher Weise wirkt sich das Bestreben nach bevorzugtem Einsatz von erneuerbarer Energie aus.

Die Erfindung wird nachfolgend anhand der Figuren in einem Ausführungsbeispiel näher erläutert.
- Fig 1: zeigt die Prinzipskizze der erfindungsgemäßen Wasserradturbine als Seitenansicht in einer bevorzugten Ausführung für die oberschlächtige Beaufschlagung.
- Fig 2: zeigt einen Ausschnitt aus Figur 1, im Schnitt.
- Fig 3: zeigt in einer Folge von Prinzipskizze die drei grundsätzlichen Betriebszustände einer erfindungsgemäßen Wasserradturbine, bzw. der Zellen derselben,nach Figur 1, und zwar mit geschlossenen Zellen während der Rotationsphase, sowie mit sich öffnenden und schließenden Zellen während der Phasen der Befüllung und Entleerung.
- Fig 4: zeigt in einem Detailausschnitt von Figur 1 den Klappenverschluß einer Zelle.
- Fig 5: zeigt den Ausschnitt einer Wasserradturbine von Figur 1, jedoch bei mittelschlächtiger Beaufschlagung.
- Fig 6: zeigt den Ausschnitt einer Wasserradturbine von Figur 1, jedoch bei unterschlächtiger Beaufschlagung.

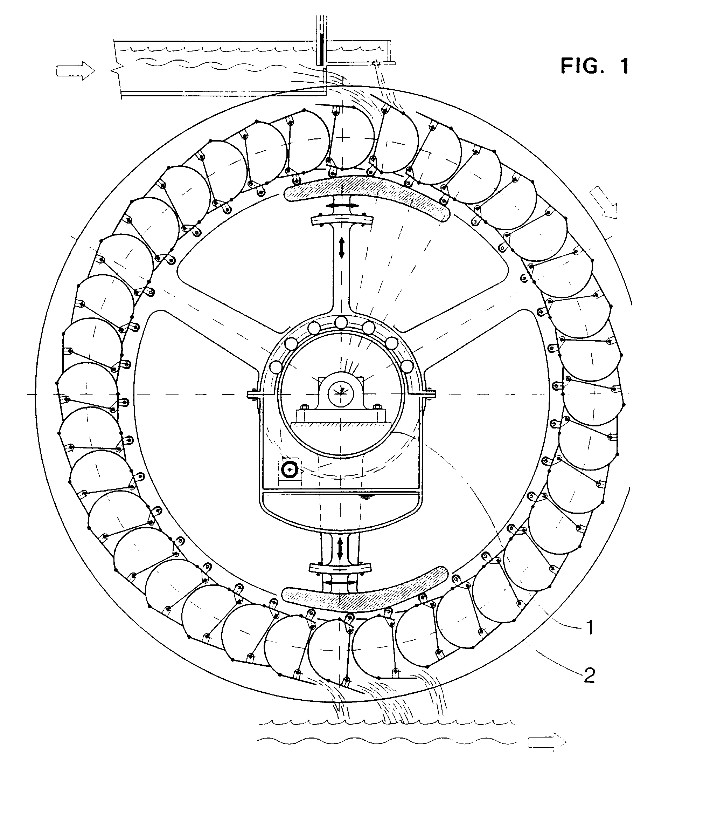

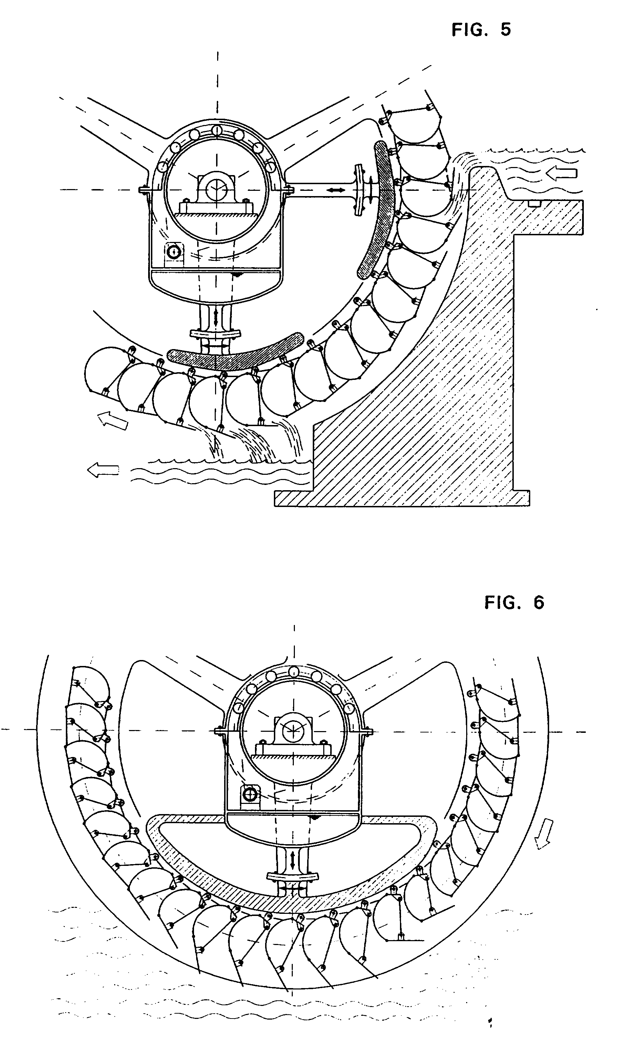

Die Figuren zeigen eine bevorzugte Ausgestaltung der Wasserradturbine im oberschlächtigen (Fig.1), im mittelschlächtigen (Fig.5) und im unterschlächtigen (Fig.6) Betrieb. Den Figuren sind die verschiedenen, dem jeweiligen Betrieb angepaßten bevorzugten Öffnungsweiten der Wasser-Verschlußklappen zu entnehmen.
Eine gewichtssparende Rad-Hohlwelle (1) trägt die Nabe der Wasserradturbine und verbindet letztere über Speichen mit zwei Radkränzen (9), welche als Träger der Zellen (2) dienen und gleichzeitig die seitlichen Begrenzungen der geschlossenen Zellen darstellen.
Die Befüllung einer Zelle mit Wasser erfolgt über die in der entsprechenden Position geöffnete Verschlußklappe (3), welche über ein Gestänge(4) mit einer Luftklappe (5) mechanisch verbunden ist. Die Klappenpaare werden jeweils über eine Rolle (7) betätigt. Die Rolle dient als Übertragungselement für die Steuerbefehle, welche beim Gleiten der Rollen über die Stirnseite einer profiliert gekrümmten Kurvenscheibe (8) von dort übernommen werden und die
Klappenpaare auf- und zusteuern.

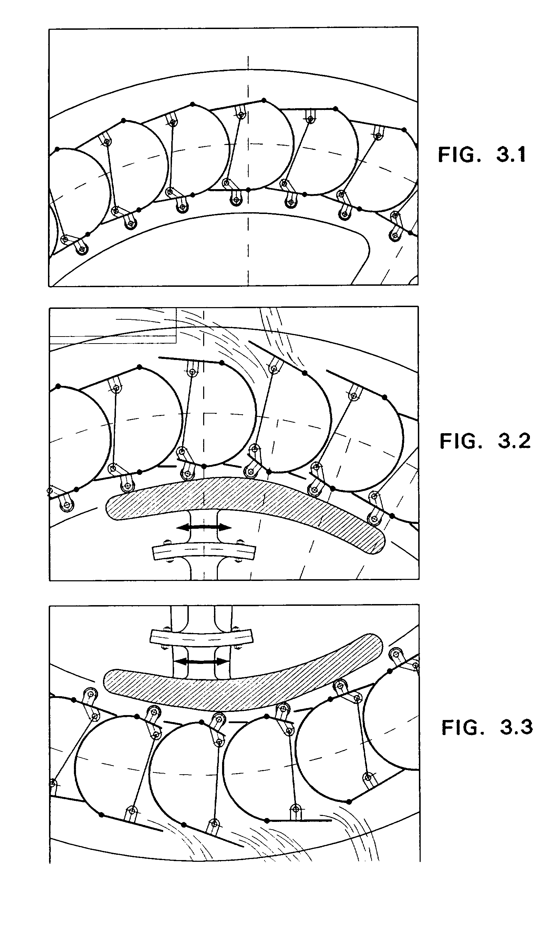

Die Figur 3.2 charakterisiert die sich kontinuierlich ändernden Klappenstellungen beim Befüllen der Zellen, die Figur 3.3 die Zustände beim Entleeren der Zellen.

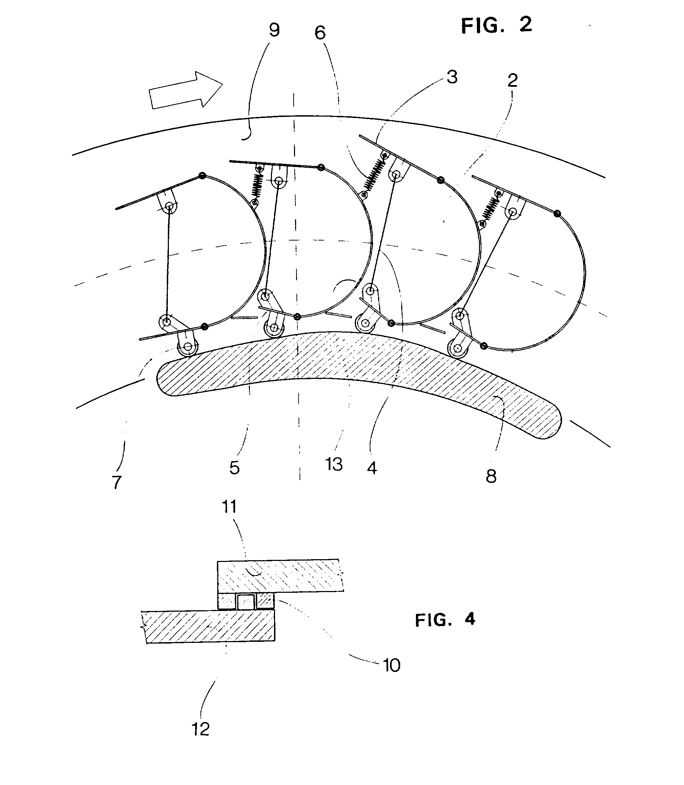

Die abstandsfrei hintereinander angeordneten Zellen und die sich jeweils in Folge ergebenden Stellungen der Verschlußklappen ermöglichen einen hohen Befüllungsgrad.
Figur 4 zeigt nach einer bevorzugten Ausführung, wie sich die Zellen mittels rechteckiger Profilstäbe (10) auf der Verschlußklappe (11) und auf der festen Zellenwand (12) ausreichend abdichten lassen.
Das Öffnen der Klappenpaare erfolgt gegen die Federkraft der in Figur 2 besonders übersichtlich dargestellten Zugfeder.
Die Zellen bleiben entsprechend Figur 3.1 während der Rotation der Wasserradturbine geschlossen, um erst kurz vor dem tiefsten Rotationspunkt mittels gleichartiger Steuerung, wie beim Befüllen, entleert zu werden.

Die Luftklappe (5) jeder Zelle dient sowohl zur Entlüftung während der Befüllung, als auch zur Belüftung bei der Entleerung.
Die wirkungsvolle Be- und Entlüftung der Zellen läßt sich mittels bekannter Maßnahmen bei der Formgebung von Zellenwand und Klappen sicherstellen, z.B. mittels Leitflossen in der Zelle.

Der hohe Wirkungsgrad der gezeigten Wasserradturbine in Nutzung der potentiellen Energie des Wassers wird durch zusätzliche Nutzung der Stoßenergie des ein- und ausströmenden Wassers nochmals nennenswert erhöht. Für die Nutzbarmachung der Stoßenergie des Wassers ist eine auf diesen Effekt genau abgestimmte Steuerung der Öffnungs- und Schließpunkte der Zellen während eines Radumlaufes entscheidend. Das läßt sich nur mit verschließbaren Zellen durchführen.

Probleme bei der Wasser-Strahlabdeckung durch die Folgezelle, wie sie bei der Beaufschlagung von Rädern mit feststehenden Schaufeln bekannt sind, z.B. beim Peltonrad, treten bei der Wasserradturbine nicht auf, da dieser Effekt sich durch Anpassung der Winkelanstellung für die Verschlußklappe umgangen werden kann.

Die Kurvenscheibe ist ein Teil der gesamten, auf der Radwelle ortsfest gelagerten Steuervorrichtung. Die Steuervorrichtung ist somit ein Anlagenteil, der seine Position im Raum beibehält. Während die eine von zwei jeweils benötigten Kurvenscheiben stets im Entleerungsbereich angeordnet sein wird, so läßt sich die andere für den Einlaß benötigte Kurvenscheibe in jeder radialen Lage des Rades positionieren, indem die zugehörigen Positionierungselemente entsprechend gegen das ortsfeste Pendelgewicht ausgerichtet und mit diesem lösbar verbunden wird. Die in Figur 1 auf den Positionierungselementen für die Kurvenscheibe angebrachten Doppelpfeile deuten an, daß sich an diesen eine Feineinstellung der Kurvenscheibe und damit eine Feinjustierung der Klappenbewegungen vornehmen läßt.

Zur Sicherstellung des Selbstanlaufs der Wasserradturbine ist in jeder Zelle eine Wandbohrung (13) angebracht. Diese erlaubt, ausgehend von der Befüllung der Füllposition befindlichen Zelle ein langsames Befüllen der lagemäßig vorauseilenden Zellen solange, bis das Losbrechmoment für den Anlauf des Rades hergestellt ist.

## Patentansprüche

1. Wasserradturbine für Wasserkraftanlagen in Nutzung der Fallhöhe des Wassers, mit waagrechter Radwelle (1) und einer Mehrzahl stirnseitig geschlossener, über Zellenöffnungen Wasser aufnehmender und abgebender, Wand an Wand angeordneter Zellen (2), wobei
jede Zellenöffnung eine Verschlußklappe (3) besitzt, dadurch gekennzeichnet daß die Verschlußklappe über ein Gestänge (4) mit einer zweiten, zur Ent- und Belüftung dienenden Luftklappe (5) mechanisch verbunden ist und daß die Wasserradturbine eine ortsfeste Steuervorrichtung und mechanische Übertragungselemente zum jeweils gleichzeitigen Öffnen und Schließen von Verschluß- und Luftklappe besitzt.

2. Wasserradturbine nach Anspruch 1, dadurch gekennzeichnet, daß die Steuervorrichtung ortsfest auf der Radwelle gelagert ist.

3. Wasserradturbine nach Anspruch 1 - 2, dadurch gekennzeichnet, daß die Steuervorrichtung Elemente besitzt, mittels der das Öffnen und Schließen der Klappen einer Zelle in unterschiedlichen, vorbestimmbaren Radialrichtungen, bezogen auf die Radwelle, erfolgt.

4. Wasserradturbine nach einem der Ansprüche 1 - 3, dadurch gekennzeichnet, daß die Steuervorrichtungen Übertra gungselemente besitzt, mittels derer ein kontinuierliches Öffnen und Schließen einzelner Klappenpaare innerhalb eines vorbestimmten Radialwinkelbereiches, bzogen auf die Radwelle, erfolgt.

5. Wasserradturbine nach Anspruch 4, dadurch gekennzeichnet, daß die Übertragungselemente eine starr mit einer Klappe verbundene Rolle (7) und eine ortsfeste Kurvenscheibe (8) sind, wobei die Rolle über die Kurvenoberfläche der Kurvenscheibe abrollt.

6. Wasserradturbine nach Anspruch 1 - 5, dadurch gekennzeichnet, daß die Steuervorrichtung Elemente besitzt, mittels derer die maximale Öffnungsweite eines Klappenpaares variabel verstellbar ist.

7. Wasserradturbine nach Anspruch 1 -6, dadurch gekennzeichnet, daß an der Klappe eine mechanische Feder (12) befestigt ist, mittels der das Öffnen des geschlossenen Klappenpaares gegen die Federkraft erfolgt.

8. Wasserradturbine nach Anspruch 1 - 7, dadurch gekennzeichnet, daß die Steuervorrichtung hydraulisch oder pneumatisch steuerbare Elemente zum Öffnen und Schließen einzelner Klappenpaare aufweist.

9. Wasserradturbine nach Anspruch 1 - 8, dadurch gekennzeichnet, daß deren Bauteile für eine Beaufschlagung mit Wasser unter erhöhtem Druck ausgelegt sind.

## Claims

1. Watenvheel turbine for hydropower plants using the head of water, with a horizontal turbine shaft (1) and a plurality of wall-to-wall-disposed cells (2) closed at their end faces, said cells (2) accepting and discharging water through cell openings, each cell opening having a closing flap (3), characterized in that the closing flap is mechanically connected by a linkage (4) to an air flap (5) serving the purpose of ventilation and air admission, and in that the waterwheel turbine has a stationary control device and mechanical transmission elements for the simultaneous opening and closing of closing flap and air flap.

2. Watenvheel turbine according to claim 1, characterized in that the control device is mounted in stationary manner on the turbine shaft.

3. Waterwheel turbine according to claims 1 to 2, characterized in that the control device has elements by means of which the flaps of a cell are opened and closed in different, predeterminable radial directions with reference to the turbine shaft.

4. Waterwheel turbine according to any one of claims 1 to 3, characterized in that the control device has transmission elements by means of which individual pairs of flaps are continuously opened and closed within a predetermined radial-angle range with reference to the turbine shaft.

5. Waterwheel turbine according to claim 4, characterized in that the transmission elements are a roller (7), rigidly connected to a flap, and a stationary cam plate (8), the roller rolling over the cam surface of the cam plate.

6. Watenvheel turbine according to claims 1 to 5, characterized in that the control device has elements by means of which the maximum opening width of a pair of flaps is variably adjustable.

7. Waterwheel turbine according to claims 1 to 6, characterized in that attached to the flap is a mechanical spring (12) by means of which the closed pair of flaps is opened against the force of the spring.

8. Waterwheel turbine according to claims 1 to 7, characterized in that the control device comprises hydraulically or pneumatically controllable elements for opening and closing individual pairs of flaps.

9. Waterwheel turbine according to claims 1 to 8, characterized in that the components thereof are designed for the admission of water at high pressure.

## Revendications

1. La turbine - roue hydraulique pour installations hydroélectriques utilisant la hauteur de chute de l'eau, avec un arbre de roue horizontal (1) et une quantité de cellules fermées sur le côté frontal, prenant et rejetant l'eau par des ouvertures et disposées paroi contre paroi (2).Chaque ouvertures de cellule est munie d'un clapet (3), caractérisée par le fait que ce clapet est relié mécaniquement par une tige (4) à un clapet d'aération (5) servant à l'amenée et à l'évacuation d'air et que la turbine roue hydraulique est equipée d'un système de commande stationnaire et des éléments de transmission mécaniques pour une ouverture et une fermeture simultanées des clapets de fermeture et d'aération.

2. La turbine - roue hydraulique selon Revendication 1, caractérisée par un système de commande stationnaire, installé sur l'arbre de la roue.

3. La turbine - roue hydraulique selon Revendication 1 - 2, caractérisée par un système de commande possédant des éléments permettant l'ouverture et la fermeture des clapets d'une cellule dans différentes directions radiales prédéfinies par rapport à l'arbre de la roue.

4. La turbine roue hydraulique selon l'un des Revendications 1 - 3, caractérisée par un système de commande qui possède des éléments de transmission grâce auxquels il est possible de procéder à une ouverture et une fermeture constantes individuelles de paires de clapets dans le cadre d'une plage d'angle radial prédéfinie par rapport à l'arbre de la roue.

5. La turbine roue hydraulique selonRevendication 4, caractérisée par les éléments de transmission consistant en un galet (7) à liaison fixe avec le clapet et une came (8) stationnaire, le galet passant sur la surface courbe de la came.

6. La turbine - -roue hydraulique selon Revendication 1 - 5, caractérisée par le système de commande qui possède des éléments permettant un réglage variable de l'amplitude maximale d'ouverture d'une paire de clapets.

7. La turbine - roue hydraulique selon Revendication 1 - 6, caractérisée par un ressort méchanique (12) fixé au clapet permettant l'ouverture de la paire de clapets fermés par le contre-effort du ressort.

8. La turbine - roue hydraulique selon Revendication 1 - 7, caractérisée par le système de commande présentant des éléments de commande hydraulique ou pneumatique pour l'ouverture et la fermeture individuelles de paires de clapets.

9. La turbine - roue hydraulique selon Revendication 1- 8, caractérisée par des éléments constitutifs dimensionnés pour une course de l'eau motrice sous pression accrue.
